# EUROPÄISCHE PATENTSCHRIFT

(11) **EP 1 102 227 B1**
(45) Veröffentlichungstag und Bekanntmachung des Hinweises auf die Patenterteilung: **28.01.2004**
(21) Anmeldenummer: 00123453.3
(22) Anmeldetag: 06.11.2000
(51) Int. Cl.: G08G 1/0968

(54) **Verfahren zur dynamischen Zielführung eines Kraftfahrzeugs**
Method for dynamic guidance of a vehicle
Procédé pour le guidage dynamique d'un véhicule

(30) Priorität: 22.11.1999 DE 19956108
(43) Veröffentlichungstag der Anmeldung: 23.05.2001
(73) Patentinhaber: Siemens Aktiengesellschaft, 80333 München (DE)
(72) Erfinder: Völkel, Andreas, 35619 Braunfels (DE)

(56) Entgegenhaltungen:
- EP-A- 0 838 797
- EP-A- 1 030 280
- DE-A- 19 748 077
- PATENT ABSTRACTS OF JAPAN vol. 1995, no. 06, 31. Juli 1995 (1995-07-31) -& JP 07 086385 A (HITACHI LTD), 31. März 1995 (1995-03-31)

## Beschreibung

Die Erfindung betrifft ein Verfahren zur dynamischen Zielführung eines Kraftfahrzeugs nach dem Oberbegriff des Anspruchs 1. Ein derartiges Verfahren ist aus der DE-A-197 48 077 bekannt.

Aus der EP 0 838 797 A1 ist ein Navigationssystem für ein Kraftfahrzeug und ein mit diesem Navigationssystem durchführbares dynamisches Zielführungsverfahren bekannt. Das bekannte Navigationssystem ist zur Auswertung von empfangenen Verkehrsinformationen vorgesehen. Mit dem vorgegebenen Ziel- und Startort des Kraftfahrzeuges wird in einer ersten Berechnung eine erste statische Route berechnet, ohne die empfangenen Verkehrsinformationen zu berücksichtigen. Die Zielführungsinformationen zu dieser ersten Route werden über eine Ausgabevorrichtung ausgegeben. Weiterhin ist vorgesehen, dass eine zweite dynamische Route mit Berücksichtigung der Verkehrsinformationen berechnet wird. Der Übergang von der ersten zur zweiten berechneten Route erfolgt nunmehr jedoch nicht automatisch. Vielmehr erhält der Fahrer über die Ausgabevorrichtung eine Auswahlinformation, so dass er selbst entscheiden kann welcher der beiden Routen er folgen will. Mit Hilfe eines solchen Navigationssystems ist es daher möglich, auftretende Verkehrsbehinderungen auf der ersten berechneten Route zu umfahren. Verkehrsinformationen zu Verkehrsbehinderungen werden in der Regel derart übermittelt, dass zwei charakteristische Straßenpunkte angegeben werden, zwischen denen die Verkehrsbehinderungen auftreten. Diese angegebenen Punkte sind jedoch nicht identisch mit dem tatsächlichen Anfang und Ende der Verkehrsbehinderungen, vielmehr handelt es sich dabei beispielsweise bei Autobahnen um zwei Anschlussstellen zwischen denen die Verkehrsbehinderung auftritt. Mit dem bekannten dynamischen Navigationsverfahren wird nun bei Vorliegen einer solchen Meldung für die erste statische Route eine zweite Route berechnet, die in der Regel an der letztmöglichen Ausfahrt vor der Verkehrsbehinderung von der ersten statischen Route abzweigt.

Ein Abzweigen von der berechneten ersten Route an der letztmöglichen Abfahrt vor einer gemeldeten Verkehrsbehinderung kann jedoch nachteilig sein. Beispielsweise kann aufgrund einer mangelnden Aktualität der Verkehrsinformation die Verkehrsbehinderung bereits über diese Abfahrt hinausreichen. Für den Fahrer hat das die unangenehme Konsequenz, dass er trotz empfangener Verkehrsinformation und Navigationssystem unerwartet in einen Stau gerät. Weiterhin ist es häufig so, dass Umgehungsrouten für eine Verkehrsbehinderung die an der letzt möglichen Ausfahrt beginnen, innerhalb kürzester Zeit überlastet sind, so dass auch auf den Umgehungsrouten ein schnelles Vorankommen nicht möglich ist.

Hier setzt nun die vorliegende Erfindung an, deren Aufgabe es ist, ein verbessertes Verfahren zur dynamischen Zielführung eines Kraftfahrzeuges anzugeben.

Die Aufgabe wird durch ein Verfahren gemäß Anspruch 1 gelöst.

Mit dem erfindungsgemäßen Verfahren wird somit im Gegensatz zu dem Vorbekannten eine Umgehungsroute nicht nur ausgehend von einem einzigen, in der Regel dem letzten, Abbiegepunkt berechnet. Vielmehr ist vorgesehen, dass zu mehreren Abbiegepunkten Umgehungsrouten berechnet werden und der Fahrer eine Auswahlinformation für die zu fahrende Route erhält, wobei die Auswahlinformation die Umgehungsrouten für mehrere Abbiegepunkte enthält. Hierdurch hat der Fahrer die Möglichkeit die zunächst berechnete erste Route bereits an einem früheren Abbiegepunkt, d. h. an einer früheren Ausfahrt, zu verlassen. Dies hat den Vorteil, dass ein zwischenzeitliches Anwachsen der Länge der Verkehrsbehinderung für den Fahrer ohne Bedeutung ist, wenn er bereits einer früheren Abbiegeempfehlung folgt. Zudem kann der Fahrer durch Wahl eines frühen Abbiegepunktes Verkehrsbehinderungen umgehen, die häufig auf der Umgehungsroute entstehen, die am letztmöglichen Abbiegepunkt von der ersten Route abweicht.

Dem Fahrer wird jedoch nicht eine beliebige Anzahl von Umgehungsrouten angeboten werden können, da dies eher zur Verwirrung beiträgt. Daher wird die Berechnung von Umgehungsrouten vorzugsweise an Kriterien für die Auswahl von Abbiegepunkten gekoppelt.

Erfindungsgemäß ist vorgesehen, dass die Entfernung vom gemeldeten Anfang der Verkehrsbehinderung zu Abbiegepunkten, an denen ein Verlassen der berechneten ersten Route möglich ist und die zwischen der aktuellen Position des Fahrzeugs und dem gemeldeten Anfang der Verkehrsbehinderung liegen, mit einem Entfernungsvorgabewert verglichen wird. Anschließend werden diejenigen Abbiegepunkte ausgewählt, deren Entfernung zum gemeldeten Anfang der Verkehrsbehinderung kleiner ist als dieser Entfernungsvorgabewert. Nur mit den so ausgewählten Abbiegepunkten werden Umgehungsrouten berechnet. Anschließend erfolgt wieder die Ausgabe einer Auswahlinformation für die zu fahrende Route, wobei die berechneten Umgehungsrouten mit den ausgewählten Abbiegepunkten angegeben werden.

In einer Abwandlung des Verfahrens ist es auch möglich, zu allen noch möglichen Abbiegepunkten Umgehungsrouten zu berechnen und erst bei der Ausgabe der Auswahlinformation die Umgehungsrouten aufzulisten, die das vorgenannte Kriterium erfüllen. Nachteilig ist bei dieser letztgenannten Variante jedoch, dass unter Umständen mehr Umgehungsrouten berechnet werden als schließlich für die Routenempfehlung ausgegeben werden.

In einer Weitergestaltung der Erfindung ist ferner vorgesehen, dass die weiteren Routenberechnungen erst oder nur dann durchgeführt werden, wenn die Entfernung des Fahrzeugs vom gemeldeten Anfang der Verkehrsbehinderung kleiner ist als ein Vorgabewert (Fahrzeugsentferungsvorgabewert ΔFS). Durch diese Vorgehensweise wird verhindert, dass bereits lange vor Erreichen der Verkehrsbehinderung Umgehungsrouten berechnet werden, da unter Umständen bis zum Erreichen des kritischen Bereichs mit den Verkehrsbehinderungen diese bereits gegenstandslos geworden sein können.

In einer alternativen Ausführungsform ist vorgesehen, dass weitere Routenberechnungen dann durchgeführt werden, wenn für die erste Route Verkehrsinformationen zur Verkehrsbehinderung vorliegen und die Entfernung des Fahrzeugs zum gemeldeten Anfang der Verkehrsbehinderung kleiner ist als ein Vorgabewert (Fahrzeugsentferungsvorgabewert ΔFS), wobei Umgehungsrouten zur Umfahrung der Verkehrsbehinderung mit allen Abbiegepunkten berechnet werden, die zwischen der aktuellen Position des Fahrzeugs und dem Anfang der Verkehrsbehinderung liegen. Bei dieser Ausführungsform ist als Kriterium somit auf die Entfernung des Fahrzeugs selbst vom gemeldeten Anfang der Verkehrsbehinderung abgestellt. Ist der Vorgabewert ΔFS hierbei genauso groß vorgegeben wie der Entfernungsvorgabewert (ΔE) nach der ersten Ausführungsvariante, so werden in beiden Ausführungsvarianten Umgehungsrouten für dieselben Abbiegepunkte berechnet, jedoch u.U. zu verschiedenen Zeitpunkten.

Um dem Fahrer eine ausreichende Auswahlmöglichkeit zur Verfügung zu stellen, ist vorgesehen, dass in einer Auswahlinformation zumindest zwei Umgehungsrouten ausgegeben werden. Um andererseits die Übersichtlichkeit nicht zu gefährden, ist vorzugsweise vorgesehen, dass eine Auswahlinformation zu nicht mehr als fünf Umgehungsrouten ausgegeben wird.

In den Industrieländern ist das Straßennetz i.a. in verschiedene Kategorien eingeteilt. Beispielsweise wird in Deutschland unterschieden zwischen Autobahnen, Kraftfahrstraßen, Bundesstraßen, usw. Diese Eingruppierung läßt häufig Rückschlüsse auf den Ausbauzustand der Straßen zu und ist beispielsweise auch bei der Ausgabe von Verkehrsinformationen von Bedeutung. In der Regel werden Verkehrsinformationen nur zu höherrangigen Straßen wie z.B. Autobahnen ausgegeben. Auf Autobahnen ist ein Verlassen der Straße jedoch nur an speziellen Anschlussstellen möglich, die in der Regel mehrere Kilometer voneinander entfernt sind. Demgegenüber weise niederrangigere Straßen, wie beispielsweise innerstädtische Straßen, häufige Kreuzungs- und damit Abbiegemöglichkeiten auf. Daher ist in einer weiteren Ausgestaltung der Erfindung vorgesehen, dass für verschiedene Straßentypen unterschiedliche Entfernungsvorgabewerte verwendet werden, insbesondere wird für höherrangige Straßen mit weit auseinander liegenden Auf- und Abfahrmöglichkeiten ein größerer Entferungsvorgabewert vorgesehen als für niederrangige Straßen.

Da der Fahrer sich für eine der vorgeschlagenen Umgehungsrouten entscheiden muss, ist vorgesehen, dass der Fahrer die hierfür nötigen Informationen in ausreichendem Maß erhält. Hierzu gehören beispielsweise Informationen über der zusätzlich durch die Umgehungsroute zurückzulegende Entfernung oder insbesondere auch Angaben über die zu erwartenden Fahrzeiten auf den verschiedenen Alternativrouten. Generell kann die zusätzliche Fahrstrecke oder die zu erwartende zusätzliche Fahrzeit auf den Alternativrouten auch als weiteres Auswahlkriterium dafür herangezogen werden, ob dem Fahrer diese spezielle Alternativroute überhaupt angezeigt werden soll.

Die Verkehrsinformationen zu Verkehrsbehinderungen können auf verschiedene Weise an das Navigationssystem übermittelt werden. In einer Ausgestaltung der Erfindung ist vorgesehen, dass die Verkehrsinformationen über ein Rundfunksystem übermittelt werden. Gegenwärtig bietet sich zur Übermittlung der Verkehrsinformationen insbesondere das weitverbreitete RDS-System oder vorzugsweise die aktuellere Weiterentwicklung als RDS/TMC-System an. Bei letztgenanntem werden die Verkehrsinformationen im Hintergrund zum laufenden Radioprogramm übertragen.

In einer weiteren Ausgestaltung der Erfindung können die Verkehrsinformationen über ein Mobilfunknetz in das Fahrzeug übertragen werden. Hierfür bietet sich beispielsweise das in Europa inzwischen weitverbreitete GSM-Netz an. Nach Anwahl einer Funkverbindung zu einem Zentralrechner können dann die Verkehrsinformationen über das Mobilfunknetz an das Navigationssystem übermittelt werden. Entsprechende dynamische Navigationssysteme mit Anbindung an ein Mobilfunknetz oder ein RDS/TMC-taugliches Radiogerät sind dem Fachmann bekannt und bilden nicht den Gegenstand dieser Erfindung.

Die Berechnung von Umgehungsrouten kann auf verschiedene Weise erfolgen, so kann beispielsweise eine Umgehungsroute derart berechnet werden, dass eine neue Route zwischen dem Zielort und den verschiedenen zuvor ausgewählten Abbiegepunkten berechnet wird. Durch dieses Verfahren kann beispielsweise eine weiträumige Umfahrung einer Verkehrsbehinderung erreicht werden. In vielen Fällen kann es jedoch auch vorteilhaft sein, nur eine lokale Umgehung der Verkehrsbehinderung vorzusehen. Für diesen Fall kann die Erfindung derart ausgebildet sein, dass Umgehungsrouten zwischen den Abbiegepunkten und Auffahrpunkten auf die erste Route berechnet werden, wobei die Auffahrpunkte zwischen dem Ende der gemeldeten Verkehrsbehinderung und dem Zielort liegen. Vorzugsweise werden nur solche Auffahrpunkte hierbei verwendet, die innerhalb einer vorgegebenen Streckenlänge hinter dem gemeldeten Ende der Verkehrsbehinderung liegen.

Die Erfindung wird nachfolgend anhand der Figur und eines Ausführungsbeispiels näher erläutert. Es zeigen:
- Fig. 1: die schematische Darstellung von Ausweichrouten nach einem ersten Kriterium,
- Fig. 2: die schematische Darstellung von Ausweichrouten nach einem zweiten Kriterium,
- Fig. 3: die schematisch Darstellung von Ausweichrouten nach einem dritten Kriterium,
- Fig. 4: die wesentlichen Komponenten eines Navigationssystems,
- Fig. 5: ein Flussdiagramm zu einem erfindungsgemäßen Verfahrensablauf.

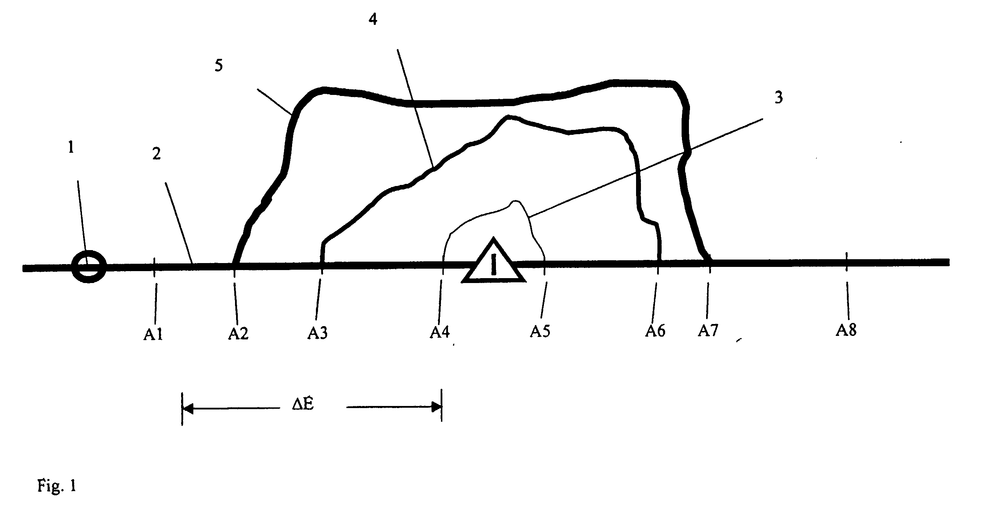

In Figur 1 ist die Auswahl von Umgehungsrouten nach einem ersten Kriterium schematisch verdeutlicht. Das Fahrzeug befindet sich an der Position 1 auf der ersten Route 2. Die erste Route 2 weist mehrere Abbiegepunkte (Auf- bzw. Abfahrten, Anschlussstellen) A1 bis A8 auf. Über die Verkehrsinformationen wird eine Verkehrsbehinderung (Stau) zwischen den Anschlussstellen A4 und A5 gemeldet. Der tatsächliche Anfang und das tatsächliche Ende der Verkehrsbehinderung sind dabei unbekannt. Nun kann es vorkommen, dass der Stau sehr rasch anwächst und beispielsweise über die Anschlussstelle A4 hinaus anwächst, so dass ein Fahrer, der über die Verkehrsbehinderung zwar informiert ist, aber aufgrund mangelnder Aktualität der Verkehrsinformationen über deren genauen Beginn nicht Bescheid weis, versucht an der Anschlussstelle A4 die erste Route 2 zu verlassen. Aufgrund der zwischenzeitlich eingetretenen Verlängerung des Rückstaues ist der Fahrer in diesem Falle dann aber doch von den Verkehrsbehinderungen betroffen. Darüber hinaus kommt es häufig vor, dass die direkte Umgehungsroute 3 zwischen den Anschlussstellen A4 und A5 schnell überlastet ist. Bei dem erfindungsgemäßen Verfahren ist daher vorgesehen, dass weitere Alternativrouten berechnet werden. Hierbei werden zusätzlich die Anschlussstellen A1, A2 und A3, die ebenfalls zwischen der gegenwärtigen Fahrzeugposition 1 und dem gemeldeten Anfang der Verkehrsbehinderung, nämlich der Anschlussstelle A4, liegen als mögliche Abbiegepunkte berücksichtigt. Es wird zunächst der Abstand dieser Anschlussstellen A1 bis A3 (und ggf. der Anschlussstelle A4) von der Anschlussstelle A4 berechnet und der jeweilige berechnete Wert mit einem Vorgabewert ΔE verglichen. Im dargestellten Beispiel sind nur die Abstände der Anschlussstellen A2, A3 und A4 von der Anschlussstelle A4 kleiner als der Vorgabewert ΔE, so dass erfindungsgemäß für diese Anschlussstellen Umgehungsrouten 3, 4, 5 berechnet werden. Der Abstand der Anschlussstelle A1 ist größer als der Vorgabewert. Somit wird für diese Anschlussstelle, die ebenfalls noch zwischen der gegenwärtigen Fahrzeugposition 1 und dem gemeldeten Anfang der Verkehrsbehinderung (Anschlussstelle A4) liegt, keine Umgehungsroute berechnet. Der Vorgabewert ΔE kann abhängig sein vom Typ der befahrenen Straße und für Autobahnen beispielsweise 50 km betragen, während er für Landstraßen nur 10 km beträgt.

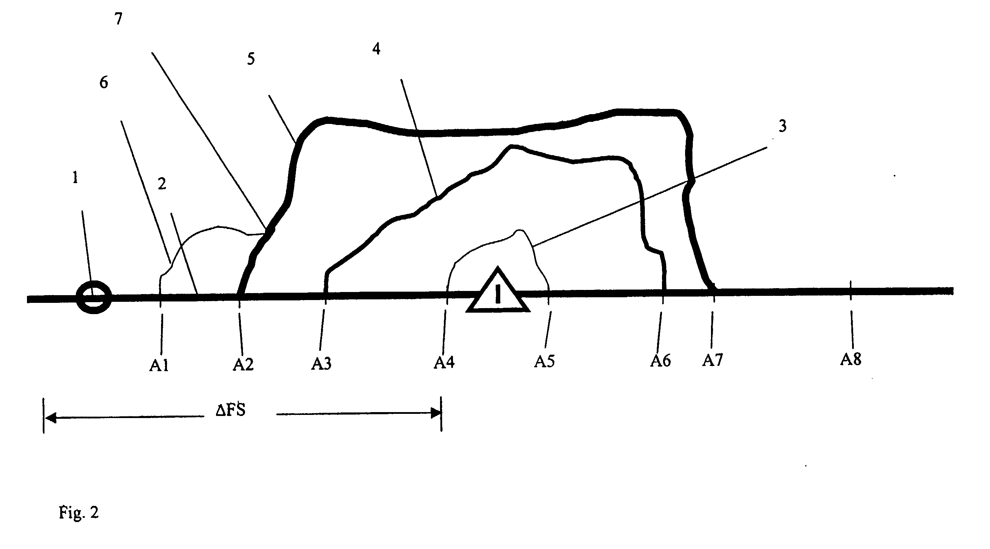

In Figur 2 ist ein alternatives Auswahlkriterium verdeutlicht. Das Fahrzeug befindet sich wiederum an der Position 1 auf der ersten Route 2, wobei zwischen den Anschlussstellen A4 und A5 eine Verkehrsbehinderung gemeldet ist. Als Kriterium, ob und für welche Anschlussstellen nunmehr Umgehungsrouten berechnet werden sollen, dient nunmehr der Abstand des Fahrzeuges vom gemeldeten Beginn der Verkehrsbehinderung. Ist dieser Abstand größer als der Fahrzeugentfernungsvorgabewert ΔFS, so werden noch keine Routenberechnungen durchgeführt. Ist der Abstand des Fahrzeuges vom gemeldeten Anfang der Verkehrsbehinderung jedoch kleiner als der Fahrzeugentfernungsvorgabewert ΔFS, wie dies in Figur 1 dargestellt ist, so werden für alle Anschlussstellen zwischen der aktuellen Fahrzeugposition 1 und dem gemeldeten Anfang der Verkehrsbehinderung Umgehungsrouten berechnet. Im dargestellten Beispiel sind dies Umgehungsrouten 3, 4, 5, 6 für die Anschlussstellen A1, A2, A3 und A4.

Durch die unterschiedliche Linienstärke der Umgehungsrouten wird dabei der Straßentyp angezeigt. Beispielsweise führt die Umgehungsroute 5 vollständig über eine hochrangige Umgehungsstraße, wie beispielsweise eine Autobahn. Die Umgehungsroute, die an der Anschlussstelle A1 beginnt, führt dagegen zunächst über eine niederrangige Straße 6 und mündet am Punkt 7 in die höherrangige Umgehungsroute 5. Auf dieser Darstellung ist ersichtlich, dass es wichtig ist, dem Fahrer Informationen zu den einzelnen Umfahrungsrouten zu geben. Aus einer bildlichen Darstellung gemäß Figur 2 kann der Fahrer beispielsweise sofort erkennen, dass die Anschlussstellen A1 und A2 noch weit genug vom gemeldeten Anfang der Verkehrsbehinderung entfernt sind. Zudem kann der Fahrer erkennen, dass er bei Verlassen der ersten Route an der Anschlussstelle A1 zunächst auf einer Straße niederen Ranges bis zum Punkt 7 fahren muss, was in diesem Falle wohl zu einer längeren Fahrzeit als das Verlassen der ersten Route an der Anschlussstelle A2 führen würde. Anstelle der graphischen Darstellung kann der Fahrer über die verschiedenen Umgehungsrouten auch derart informiert werden, dass ihm beispielsweise die zu erwartende Fahrzeit unter Berücksichtigung der verschiedenen Straßentypen angezeigt wird.

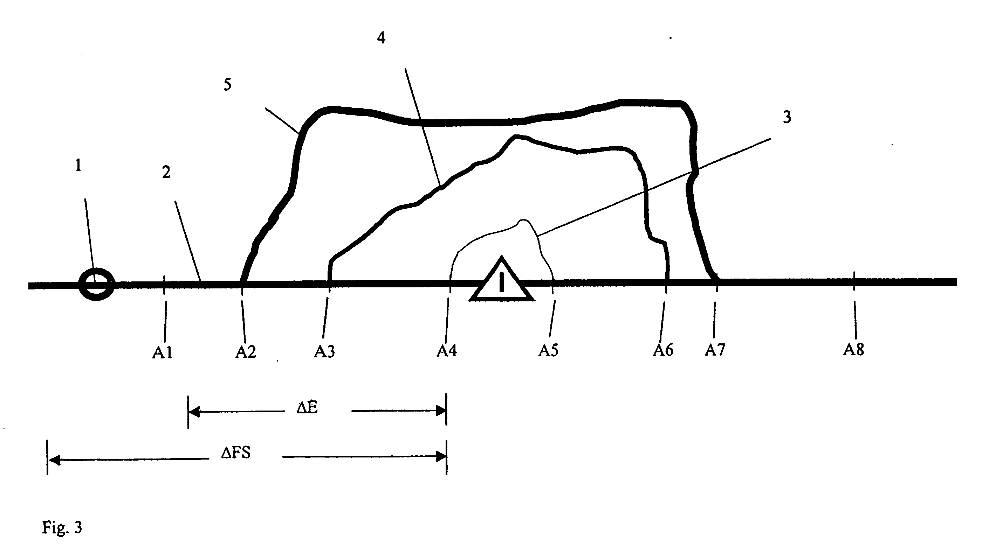

In Figur 3 ist eine weitere Ausgestaltung der Erfindung verdeutlicht, die in gewissem Sinne die Ausgestaltungen nach Fig. 1 und 2 kombiniert. Wie bei der Ausgestaltung nach Fig. 1 werden hier nur Umgehungsrouten für solche Anschlussstellen berechnet, deren Abstand vom gemeldeten Anfang der Verkehrsbehinderung kleiner ist als der Vorgabewert ΔE. Im dargestellten Beispiel sind dies die Umgehungsrouten 3, 4, 5, die an den Anschlussstellen A2 bis A4 beginnen. Im Gegensatz zum Ausführungsbeispiel nach Fig. 1 werden diese Umgehungsrouten nunmehr aber erst dann berechnet, wenn der Abstand der gegenwärtigen Fahrzeugposition 1 vom gemeldeten Anfang der Verkehrsbehinderung (Anschlussstelle A4) kleiner ist als ein Vorgabewert (Fahrzeugentferungsvorgabewert ΔFS). ΔFS wird hierbei in der Regel größer sein als ΔE, jedoch ist es auch möglich für beide den gleichen Wert zu verwenden.

In den in den Figuren 1 bis 3 dargestellten Beispielen führen die Umgehungsrouten 3, 4, 5 immer schnellstmöglich wieder auf die ursprüngliche Route 2 zurück. Es ist jedoch auch möglich, die Umgehungsrouten zwischen dem Zielort und den Anschlussstellen A2, A3, A4 zu berechnen, ohne dass versucht wird möglichst frühzeitig wieder auf die ursprüngliche Route 2 zurückzukehren.

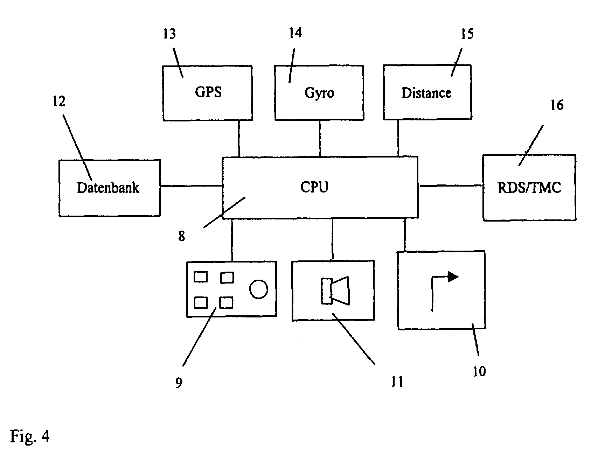

In Figur 4 sind die Komponenten eines zur Durchführung des erfindungsgemäßen Verfahrens geeigneten Navigationssystems für Kraftfahrzeuge schematisch dargestellt. Zentraler Bestandteil des Navigationssystems ist die Recheneinheit (CPU) 8. Mit der CPU 8 ist eine Bedieneinheit 9 verbunden, über die beispielsweise der Zielort eingegeben oder ausgewählt werden kann. Die Bedieneinheit 9 kann im gleichen Gehäuse wie die CPU 8 untergebracht sein, jedoch kann die Bedieneinheit 9 auch als Fernbedienung ausgebildet sein, die mit der CPU 8 beispielsweise über eine optische Schnittstelle oder eine Funkschnittstelle in Verbindung steht. Mit der CPU 8 ist eine optische Ausgabeeinheit 10 verbunden, über die Zielführungsinformationen und sonstige Informationen ausgegeben werden. Die Zielführungsinformationen können weiterhin über einen Lautsprecher 11 akustisch ausgegeben werden. Die CPU 8 ist ferner mit einer Datenbank 12 verbunden, die die Landkartendaten enthält. Die Landkartendaten sind beispielsweise auf einer CD-ROM abgespeichert. In diesem Falle enthält das Navigationssystem ein CD-ROM Laufwerk, das mit der CPU 8 verbunden ist. Anhand der Landkartendaten kann von der CPU 8 bei bekanntem Start- und Zielort in bekannter Weise eine Berechnung der optimalen Route durchgeführt werden, die dann über die optische Ausgabeeinheit 10 ausgegeben werden kann. Zur Bestimmung der aktuellen Fahrzeugposition enthält das Navigationssystem ferner einen Empfänger 13 zum Empfang von Satellitennavigationssignalen. Um eine satellitenunabhängige Positionsbestimmung durchführen zu können, enthält das Navigationssystem ferner einen Richtungssensor 14 und einen Wegsensor 15, die ebenfalls mit der CPU 8 verbunden sind, so dass mit Hilfe eines geeigneten Computerprogrammes mit diesen Signalen eine Positionsbestimmung möglich ist. Ferner ist die CPU 8 mit einem Rundfunkempfänger 16 verbunden, der zum Empfang von RDS/TMC Signalen ausgebildet ist. Somit können empfangene Verkehrsinformationen vom Rundfunkempfänger 16 an die CPU 8 weitergeleitet und zur Berücksichtigung bei der Routenberechnung herangezogen werden. Ein solches dynamisches Navigationssystem ist bekannt und bildet nicht den Inhalt der vorliegenden Erfindung.

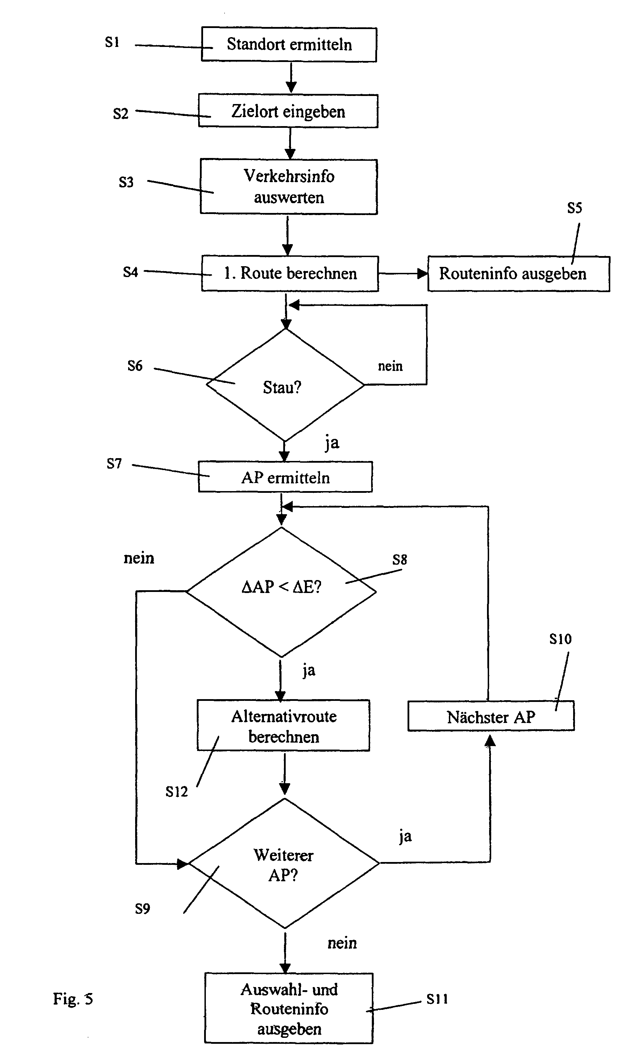

In Figur 5 ist ein Flussdiagramm eines erfindungsgemäßen Verfahrens dargestellt, das beispielsweise mit dem in Fig. 4 angegebenen Navigationssystem ausgeführt werden kann. Zunächst wird in Schritt S1 der Standort des Fahrzeuges ermittelt. Dies kann beispielsweise über die bekannte GPS-Navigation erfolgen. Anschließend wird der gewünschte Zielort eingegeben (Schritt 3). Mit den digitalen Kartendaten kann nun bereits eine Berechnung der ersten Route durchgeführt werden, wenn hierfür keine Verkehrsinformationen berücksichtigt werden sollen. Ansonsten werden zuvor in Schritt S3 die Verkehrsinformationen ausgewertet und auch bereits bei der ersten Routenberechnung in Schritt S4 berücksichtigt. Anschließend werden die Routeninformationen in bekannter Weise akustisch und/oder optisch zur Führung des Fahrzeuglenkers ausgegeben (Schritt 5). Parallel dazu erfolgt ständig oder in bestimmten Zeitabständen eine Abfrage, ob mit den Verkehrsinformationen ein Stau auf der ersten Route neu gemeldet wird (Schritt S6). Ist dies der Fall, so werden nachfolgend in Schritt S7 die möglichen Abbiegepunkte ermittelt, die zwischen der gegenwärtigen Fahrzeugposition und dem gemeldeten Anfang der Verkehrsbehinderung liegen. In Schritt S8 wird dann geprüft, ob der Abstand ΔAP des (ersten) Abbiegepunktes vom gemeldeten Beginn der Verkehrsbehinderung kleiner ist als ein Vorgabewert ΔE. Ist dies nicht der Fall, so wird geprüft ob ein weiterer möglicher Abbiegepunkt vorliegt (Schritt S9). Ist dies der Fall, so wird in Schritt S10 der nächste Abbiegepunkt ausgewählt und die Abfrage in Punkt S8 für diesen neuen Abbiegepunkt durchgeführt. Liegt in Schritt 9 kein weiterer Abbiegepunkt vor, so erfolgt die Ausgabe der Auswahl- und Routeninformation.

Ergibt sich in Schritt S8, dass der Abstand eines Abbiegepunktes vom gemeldeten Anfang der Verkehrsbehinderung kleiner ist als der Vorgabewert ΔE, so wird für diesen Abbiegepunkt in Schritt S12 eine Umgehungsroute als Altemativroute berechnet. Anschließend erfolgt wiederum in Schritt S9 die Abfrage ob ein weiterer Abbiegepunkt vorliegt. Liegt kein weiterer Abbiegepunkt mehr vor, so wird dem Fahrer eine Auswahlinformation zu den möglichen Umgehungsrouten ausgegeben, sowie natürlich weiterhin die erforderliche Fahrinformation zur Zielführung.

Die Auswahl einer speziellen Route kann auf verschiedene Weise erfolgen. Beispielsweise kann eine Route über die Bedieneinheit 9 ausgewählt werden. Der Fahrer erhält dann Zielführungsinformationen für diese Route. Alternativ kann die Auswahl einer Route aber auch durch "Fahren dieser Route" erfolgen. Dies bedeutet, dass das System selbsttätig erkennt, welcher der vorgeschlagenen Routen der Fahrer folgt. Sobald erkannt wurde, dass sich der Fahrer für eine Alternativroute entschieden hat, erhält er anschließend auch die Führungsinformationen zu dieser Alternativroute.

Das in Figur 5 dargestellte Flussdiagramm entspricht einem Verfahren zur Auswahl von Umgehungsrouten wie es im Zusammenhang mit der Figur 1 verdeutlicht wurde. Abwandlungen, gemäß den im Zusammenhang mit Fig. 2 und 3 erläuterten Kriterien, sind ohne weiteres möglich.

## Patentansprüche

1. Verfahren zur Zielführung eines Kraftfahrzeugs mit den Verfahrensschritten:
- Berechnen einer ersten Route zwischen einem Startund einem Zielort,
- Ausgabe von Zielführungsinformationen zu der berechneten Route über ein optisches und/oder akustisches Ausgabemedium,
- Empfangen von Verkehrsinformationen von einer externen Sendeeinheit,
- Ausfiltern der für die berechnete Route relevanten Verkehrsinformationen,
- Durchführen von weiteren Routenberechnungen für Umgehungsrouten, wobei Umgehungsrouten für mehrere Abbiegepunkte berechnet werden, an denen ein Verlassen der berechneten ersten Route möglich ist und die zwischen der aktuellen Position des Fahrzeugs und dem gemeldeten Anfang der Verkehrbehinderung liegen
- Ausgabe einer Auswahlinformation für die zu fahrende Route unter Einbeziehung von Umgehungsrouten, **dadurch gekennzeichnet, daß** für die berechnete Route relevanten Verkehrsinformationen aus den empfangenen Verkehrsinformationen ausgefiltert werden und die weiteren Routenberechnungen für Umgehungsrouten durchgeführt werden, wenn für die erste Route Verkehrsinformationen zu Verkehrsbehinderungen vorliegen und daß die Berechnung der Umgehungsrouten folgende Verfahrensschritte umfaßt:
- Vergleichen der Entfernung vom gemeldeten Anfang der Verkehrsbehinderung zu Abbiegepunkten, an denen ein Verlassen der berechneten ersten Route möglich ist und die zwischen der aktuellen Position des Fahrzeugs und dem gemeldeten Anfang der Verkehrsbehinderung liegen, mit einem Entfernungsvorgabewert (ΔE),
- Auswählen derjenigen Abbiegepunkte, deren Entfernung zum gemeldeten Anfang der Verkehrsbehinderung kleiner ist als der Entfernungsvorgabewert,
- Berechnen von Umgehungsrouten mit den Abbiegepunkten zum Umfahren der Verkehrsbehinderung, sowie
- Ausgabe einer Auswahlinformation für die zu fahrende Route unter Einbeziehung von Umgehungsrouten mit den ausgewählten Abbiegepunkten.

2. Verfahren nach Anspruch 1, **dadurch gekennzeichnet, daß** nur Umgehungsrouten mit den ausgewählten Abbiegepunkten berechnet werden.

3. Verfahren nach einem der vorhergehenden Ansprüche, **dadurch gekennzeichnet, daß** die weiteren Routenberechnungen erst oder nur dann durchgeführt werden, wenn die Entfernung des Fahrzeugs vom gemeldeten Anfang der Verkehrsbehinderung kleiner ist als ein Vorgabewert (Fahrzeugentfernungsvorgabewert ΔFS).

4. Verfahren nach Anspruch 1, **dadurch gekennzeichnet, daß** weitere Routenberechnungen durchgeführt werden, wenn für die erste Route Verkehrsinformationen zu Verkehrsbehinderungen vorliegen und die Entfernung des Fahrzeugs zum gemeldeten Anfang der Verkehrsbehinderung kleiner ist als ein Vorgabewert (Fahrzeugentfernungsvorgabewert ΔFS), wobei Umgehungsrouten zur Umfahrung der Verkehrsbehinderung mit allen Abbiegepunkten, die zwischen der aktuellen Position des Fahrzeugs und dem Anfang der Verkehrsbehinderung liegen, berechnet werden.

5. Verfahren nach einem der vorhergehenden Ansprüche, **dadurch gekennzeichnet, daß** eine Auswahlinformation zu mindestens zwei Umgehungsrouten ausgegeben wird.

6. Verfahren nach einem der vorhergehenden Ansprüchen, **dadurch gekennzeichnet, daß** eine Auswahlinformation zu nicht mehr als fünf Umgehungsrouten ausgegeben wird.

7. Verfahren nach einem der vorhergehenden Ansprüche, **dadurch gekennzeichnet, daß** für verschiedene Straßentypen unterschiedliche Entfernungsvorgabewerte verwendet werden.

8. Verfahren nach Anspruch 7, **dadurch gekennzeichnet, daß** der Entfernungsvorgabewert eines höherrangigen Straßentyps größer ist als der Entfernungsvorgabewert eines niederrangigen Straßentyps.

9. Verfahren nach einem der vorhergehenden Ansprüche, **dadurch gekennzeichnet, daß** die Ausgabe der Auswahlinformation optisch erfolgt und Informationen zu den Umgehungsrouten enthält.

10. Verfahren nach Anspruch 9, **dadurch gekennzeichnet, daß** als Information zu den Umgehungsrouten die zusätzlich zurückzulegende Strecke angegeben wird.

11. Verfahren nach einem der vorhergehenden Ansprüche, **dadurch gekennzeichnet, daß** die Verkehrsinformationen über ein Rundfunksystem übermittelt werden.

12. Verfahren nach Anspruch 11, **dadurch gekennzeichnet, daß** die Informationen RDS- oder RDS/TMC-Informationen sind.

13. Verfahren nach einem der vorhergehenden Ansprüche 1 bis 10, **dadurch gekennzeichnet, daß** die Informationen über ein Mobilfunksystem übermittelt werden.

14. Verfahren nach einem der vorhergehenden Ansprüche, **dadurch gekennzeichnet, daß** Umgehungsrouten zwischen dem Zielort und den Abbiegepunkten berechnet werden.

15. Verfahren nach einem der vorhergehenden Ansprüche 1 bis 14, **dadurch gekennzeichnet, daß** Umgehungsrouten zwischen den Abbiegepunkten und Auffahrpunkten auf die erste Route berechnet werden, wobei die Auffahrpunkte zwischen dem Ende der gemeldeten Verkehrsbehinderung und dem Zielort sowie innerhalb einer vorgegebenen Streckenlänge hinter dem gemeldeten Ende der Verkehrsbehinderung liegen.

## Claims

1. Method for routing a motor vehicle having the method steps:
- calculation of a first route having a starting location and a destination,
- outputting of routing information relating to the calculated route via an optical and/or audible output medium,
- reception of traffic information from an external transmitter unit,
- filtering output of the traffic information which is relevant to the calculated route,
- execution of further route calculations for detours, detours being calculated for a plurality of turning-off points at which the calculated first route can be departed from and which are located between the. current position of the vehicle and the signalled start of the traffic obstacle
- outputting of selection information for the route to be travelled on including detour routes,
**characterized in that** traffic information which is relevant to the calculated route is filtered out of the received traffic information and the further route calculations are carried out for detour routes if traffic information relating to traffic obstacles is present for the first route, and **in that** the calculation of the detour route comprises the following steps:
- the distance between the signalled start of the traffic obstacle and turning-off points at which the calculated first route can be departed from and which are located between the current position of the vehicle and the signalled start of the traffic obstacle are compared with a predefined distance value (ΔE),
- selection of those turning-off points whose distance from the signalled start of the traffic obstacle is shorter than the predefined distance value,
- calculation of detour routes using the turning-off points for travelling around the traffic obstacle, and
- outputting of selection information for the route to be travelled on including detour routes with the selected turning-off points.

2. Method as claimed in Claim 1, **characterized in that** only detour routes with the selected turning-off points are calculated.

3. Method according to one of the preceding claims, **characterized in that** the further route calculations are only carried out when the distance between the vehicle and the signalled start of the traffic obstacle is shorter than a predefined value (vehicle distance predefined value ΔFS).

4. Method according to Claim 1, **characterized in that** further route calculations are carried out if traffic information relating to traffic obstacles is present for the first route and the distance between the vehicle and the signalled start of the traffic obstacle is shorter than a predefined value (vehicle distance predefined value ΔFS), detour routes for travelling around the traffic obstacle with all the turning-off points which are located between the current position of the vehicle and the start of the traffic obstacle being calculated.

5. Method according to one of the preceding claims, **characterized in that** an item of selection information relating to at least two detour routes is output.

6. Method according to one of the preceding claims, **characterized in that** one item of selection information relating to not more than five detour routes is output.

7. Method according to one of the preceding claims, **characterized in that** different distance predefined values are used for different types of road.

8. Method according to Claim 7, **characterized in that** the distance predefined value of a higher-ranking type of road is larger than the distance predefined value of a lower-ranking type of road.

9. Method according to one of the preceding claims, **characterized in that** the selection information is output visually and contains information on the detour routes.

10. Method according to Claim 9, **characterized in that** the distance which is to be additionally travelled is specified as information on the detour routes.

11. Method according to one of the preceding claims, **characterized in that** the traffic information is transmitted via a radio system.

12. Method according to Claim 11, **characterized in that** the information is RDS or RDS/TMS information.

13. Method according to one of the preceding Claims 1 to 10, **characterized in that** the information is transmitted via a mobile radio system.

14. Method according to one of the preceding claims, **characterized in that** detour routes between the destination and the turning-off points are calculated.

15. Method according to one of the preceding Claims 1 to 14, **characterized in that** detour routes between the turning-off points and entry points to the first route are calculated, the approach points lying between the end of the signalled traffic obstacle and the destination as well as within a predefined distance after the signalled end of the traffic obstacle.

## Revendications

1. Procédé de guidage d'un véhicule, englobant les étapes suivantes :
- calcul d'un premier trajet entre un lieu de départ et un lieu de destination,
- édition d'informations de guidage concernant le trajet calculé, par l'intermédiaire d'un moyen d'édition optique et/ou acoustique,
- réception d'informations concernant le trafic, à partir d'un émetteur externe,
- filtrage des informations concernant le trafic qui sont déterminantes pour le trajet calculé,
- réalisation de calculs supplémentaires de trajets pour des trajets de contournement, des trajets de contoumement étant calculés à partir de plusieurs points de déviation, par lesquels il est possible de quitter le premier trajet calculé et qui se situent entre la position actuelle du véhicule et le début signalé de l'encombrement routier,
- édition d'une information de sélection pour le trajet à emprunter, sous considération de trajets de contoumement,
**caractérisé en ce que**
des informations concernant le trafic qui sont déterminantes pour le trajet calculé sont filtrées à partir des informations concernant le trafic qui ont été réceptionnées et les calculs supplémentaires de trajets de contournement sont réalisés, si pour le premier trajet les informations concernant le trafic ont signalé des encombrements routiers et **en ce que** le calcul des trajets de contournement comprend les étapes de procédé suivantes :
- comparaison de l'éloignement entre le début signalé de l'encombrement routier et des points de déviation, par lesquels il est possible de quitter le premier trajet calculé et qui se situent entre la position actuelle du véhicule et le début signalé de l'encombrement routier, avec une valeur prescrite pour l'éloignement (ΔE),
- sélection des points de déviation, dont l'éloignement par rapport au début signalé de l'encombrement routier est inférieur à la valeur prescrite pour l'éloignement,
- calcul de trajets de contournement à partir des points de déviation, pour éviter l'encombrement routier, ainsi que
- édition d'une information de sélection du trajet à emprunter, sous considération de trajets de contournement à partir des points de déviation sélectionnés.

2. Procédé selon la revendication 1,
**caractérisé en ce que**
seuls des trajets de contournement à partir des points de déviation sélectionnés sont calculés.

3. Procédé selon l'une quelconque des revendications précédentes,
**caractérisé en ce que**
les calculs supplémentaires de trajets ne sont réalisés qu'à partir du moment où, ou seulement si l'éloignement entre le véhicule et le début signalé de l'encombrement routier est inférieur à une valeur prescrite (valeur prescrite pour l'éloignement du véhicule ΔFS).

4. Procédé selon la revendication 1,
**caractérisé en ce que**
des calculs supplémentaires de trajets sont réalisés lorsque pour le premier trajet, des informations concernant des encombrements routiers sont données et lorsque l'éloignement du véhicule par rapport au début signalé de l'encombrement routier est inférieur à une valeur prescrite (valeur prescrite pour l'éloignement du véhicule ΔFS), des routes de contournement pour éviter l'encombrement routier étant calculées à partir de tous les points de déviation se situant entre la position actuelle du véhicule et le début de l'encombrement routier.

5. Procédé selon l'une quelconque des revendications précédentes,
**caractérisé en ce**
**qu'**une information de sélection est éditée pour au moins deux trajets de contournement.

6. Procédé selon l'une quelconque des revendications précédentes,
**caractérisé en ce**
**qu'**une information de sélection est éditée pour un maximum de cinq trajets de contournement.

7. Procédé selon l'une quelconque des revendications précédentes,
**caractérisé en ce que**
pour différents types de routes, des valeurs prescrites différentes concernant l'éloignement sont utilisées.

8. Procédé selon la revendication 7,
**caractérisé en ce que**
pour une route de rang supérieur, la valeur prescrite pour l'éloignement est plus élevée que la valeur prescrite pour l'éloignement concernant une route d'un type de rang inférieur.

9. Procédé selon l'une quelconque des revendications précédentes,
**caractérisé en ce que**
l'édition de l'information de sélection est de type optique et qu'elle contient des informations concernant les trajets de contoumement.

10. Procédé selon la revendication 9,
**caractérisé en ce que**
le trajet supplémentaire à effectuer est indiqué à titre d'information concernant les trajets de contournement.

11. Procédé selon l'une quelconque des revendications précédentes,
**caractérisé en ce que**,
les informations concernant le trafic sont transmises par l'intermédiaire d'un système de radiodiffusion.

12. Procédé selon la revendication 11,
**caractérisé en ce que**
les informations sont des informations RDS ou RDS/TMC.

13. Procédé selon l'une quelconque des revendications précédentes 1 à 10, **caractérisé en ce que**
les informations sont transmises par l'intermédiaire d'un système de radiocommunication mobile.

14. Procédé selon l'une quelconque des revendications précédentes,
**caractérisé en ce que**
des trajets de contournement sont calculés entre le lieu de destination et les points de déviation.

15. Procédé selon l'une quelconque des revendications 1 à 14,
**caractérisé en ce que**
des trajets de contournement sont calculés entre les points de déviation et les points d'accès au premier trajet, les points d'accès se situant entre la fin des encombrements routiers signalés et le lieu de destination, ainsi qu'au sein d'un trajet d'une longueur prescrite, situé derrière la fin signalée de l'encombrement routier.
